# FASCICULE DE BREVET EUROPEEN

(11) **EP 3 630 550 B1**
(45) Date de publication et mention de la délivrance du brevet: **17.03.2021**
(21) Numéro de dépôt: 18723900.9
(22) Date de dépôt: 06.04.2018
(51) Int. Cl.: B60R 13/08, B60R 16/02

(54) **DISPOSITIF DE MAINTIEN D'UNE COUVERTURE D'INSONORISATION DE TRAVERSE INFERIEURE DE BAIE ET DE TABLIER AVANT**
HALTEVORRICHTUNG FÜR EIN SCHALLDÄMMUNGSABDECKUNG FÜR EIN UNTEREN QUERTRÄGER DER CHASSIS UND DER FRONTSCHOTT
WINDSCREEN LOWER CROSSMEMBER AND FRONT BULKHEAD SOUNDPROOFING COVER RETENTION DEVICE

(30) Priorité: 23.05.2017 FR 1754553
(43) Date de publication de la demande: 08.04.2020
(73) Titulaire: PSA Automobiles SA, 78300 Poissy (FR)
(72) Inventeur: MITOUART, Jean Guy, 77310 Pringy (FR); DHUMEZ, Cyril, 91310 Montlhery (FR)
(86) Numéro de dépôt international: PCT/FR2018/050870
(87) Numéro de publication internationale: WO 2018/215706

(56) Documents cités:
- FR-A1- 2 812 064
- FR-A1- 2 899 301
- FR-A1- 3 000 622
- US-A- 5 601 899

## Description

### Domaine de l'invention

La présente invention concerne l'agencement des faisceaux électriques cheminant entre la planche de bord, le tablier avant et la traverse inférieure de baie.

L'invention vise en particulier un dispositif de maintien d'une telle couverture d'insonorisation

US5601899 A décrit, selon le préambule de la revendication 1, un dispositif de maintien d'une couverture d'insonorisation de traverse inférieure de baie et de tablier avant.

### Arrière-plan de l'invention

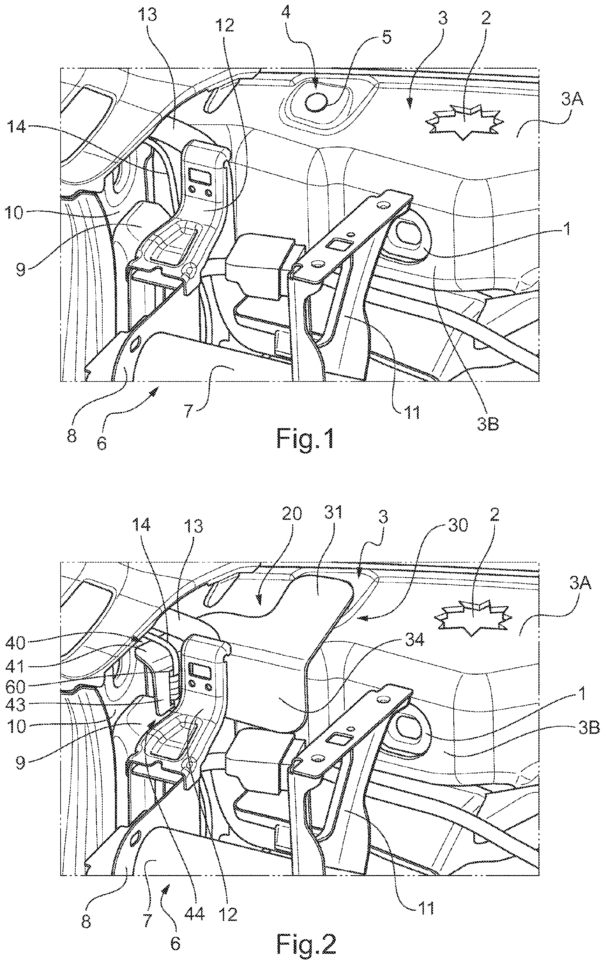

La figure 1 représente une vue partielle en perspective de la partie avant gauche de l'habitacle d'un véhicule automobile séparé du compartiment moteur par un tablier avant 1 et une traverse inférieure de baie 2.

La traverse inférieure de baie 2 est un élément de structure de caisse formée d'une pièce de tôle emboutie s'étendant transversalement le long du bord inférieur de l'ouverture du pare-brise. Le tablier avant 1 s'étend également transversalement en étant situé sensiblement sous la traverse inférieure de baie 2 qu'il relie au plancher du véhicule.

Ce tablier 1 est fixé sur la traverse inférieure de baie 2 de manière définitive, par exemple par soudage de leurs bords de jonction.

La traverse inférieure de baie 2 et le tablier 1 sont recouverts d'une couverture d'insonorisation 3 permettant d'éviter la propagation dans l'habitacle des ondes sonores en provenance du compartiment moteur.

Cette couverture d'insonorisation 3 est généralement maintenue plaquée contre la traverse inférieure de baie 2 par l'intermédiaire d'une pluralité de pions d'attache en forme de champignon 4 comportant chacun une paroi circulaire de retenue 5 et un organe de montage creux (non visible sur cette figure) s'étendant depuis cette paroi de retenue 5, cet organe traversant un perçage (non visible) de forme complémentaire ménagé dans le panneau supérieur 3A de la couverture d'insonorisation 3 et étant encliqueté sur un goujon (non visible) saillant à l'intérieur de ce perçage depuis la face supérieure de la traverse de baie 2.

A proximité de cette traverse inférieure de baie 2 et de ce tablier avant 1, la zone avant de l'habitacle accueille également une traverse de planche de bord 6 soutenant la planche de bord (non représentée pour faciliter la lecture) ainsi que divers équipements tels que la colonne de direction, le dispositif de coussin gonflable ou encore le pédalier (ces équipements n'étant pas non plus représentés).

Cette traverse de planche de bord 6 comporte un corps tubulaire transversal 7 aux deux extrémités duquel sont agencés des étriers de fixation 8 venant se fixer par vissage sur deux supports latéraux 9 en tôle solidaires de la structure de caisse du véhicule et situés à proximité des pieds avants 10.

Une telle traverse de planche de bord 6 comprend en outre des inserts métalliques 11, 12 soudés sur le corps tubulaire 7 ou sur les étriers de fixation 8 et destinés à permettre la fixation de la planche de bord et des équipements associés.

Cette zone avant de l'habitacle est traversée par plusieurs faisceaux électriques 13, 14 destinés à alimenter certains dispositifs électriques du véhicule logés dans le pavillon ou dans l'habitacle du véhicule tels que les coussins de sécurité latéraux ou les plafonniers lumineux.

Le nombre de ces dispositifs ne cessant de croître, les diamètres de ces faisceaux électriques augmentent en conséquence ainsi que les risques de pincement de ces derniers par les inserts métalliques 11, 12 lors de la mise en place de l'ensemble traverse de planche de bord 6 / planche de bord.

De tels pincements peuvent entrainer le dysfonctionnement de certains des dispositifs électriques (les coussins de sécurité pouvant par exemple se déclencher de manière intempestive) et nécessitent un démontage complet de la planche de bord pour y remédier.

Par ailleurs, pour des raisons évidentes d'étanchéité, il n'est pas possible de pratiquer des trous de fixation pour des agrafes de bridage dans le tablier 1 ou dans la traverse inférieure de baie 2.

D'autres interfaces de fixation de type goujon ne sont pas plus envisageables car l'épaisseur de la tôle est trop importante pour y réaliser des soudures.

### Objet et résumé de l'invention

La présente invention vise donc à éviter le pincement des faisceaux électriques cheminant dans la zone avant de l'habitacle entre le tablier avant et la planche de bord.

Elle propose à cet effet un dispositif de maintien d'une couverture d'insonorisation de traverse inférieure de baie et de tablier avant d'un véhicule automobile, comportant une paroi de retenue et un organe de montage creux s'étendant depuis ladite paroi de retenue, ledit dispositif étant apte à occuper une configuration de service dans laquelle ledit organe de montage traverse un perçage ménagé dans ladite couverture en étant encliqueté sur un goujon saillant à l'intérieur dudit perçage depuis ladite traverse inférieure de baie de sorte que ladite couverture d'insonorisation soit prise en sandwich entre ladite paroi de retenue et ladite traverse inférieure de baie ;
caractérisé en ce qu'il comporte en outre au moins une paroi d'attache reliée rigidement à ladite paroi de retenue et dotée d'au moins une interface d'accueil pour une agrafe de bridage d'un faisceau électrique.

Le dispositif selon l'invention permet ainsi d'assurer, en plus d'une première fonction classique de maintien de la couverture d'insonorisation contre la traverse inférieure de baie, une seconde fonction de point de fixation pour au moins une agrafe de bridage d'un faisceau électrique cheminant dans la zone avant de l'habitacle en arrière du tablier avant.

L'utilisation d'un ou plusieurs de ces dispositifs permet ainsi d'éviter tout risque de pincement de tels faisceaux électriques par des inserts métalliques liés à la traverse de planche de bord lors du montage du sous-ensemble traverse de planche de bord / planche de bord dans l'habitacle.

Selon des caractéristiques préférées dudit dispositif de maintien, prises seules ou en combinaison :
- chaque dite interface d'accueil comprend au moins un orifice ;
- ledit dispositif comporte un corps principal comprenant ladite paroi de retenue et une façade s'étendant verticalement depuis le bord arrière de ladite paroi de retenue, ladite façade étant conformée de sorte à s'étendre parallèlement audit tablier avant dans ladite configuration de service en épousant une portion de ladite couverture d'insonorisation ;
- ladite façade constitue une dite paroi d'attache ;
- ledit dispositif comporte une extension comportant au moins un premier muret vertical prolongeant ladite façade du corps principal vers l'arrière depuis l'un de ses bords latéraux ;
- ladite extension comporte en outre un second muret vertical s'étendant en biais vers l'arrière dans le prolongement dudit premier muret vertical ;
- au moins un dit muret vertical constitue une dite paroi d'attache ;
- ladite extension présente une découpe ménagée dans un dit muret et conformée de sorte à, dans ladite configuration de service, s'emboîter par correspondance de forme sur un élément support solidaire de la structure de caisse dudit véhicule ; et/ou
- ledit dispositif est venu de moulage d'une seule pièce à partir d'un matériau thermoplastique.

L'invention vise également sous un second aspect, un ensemble comportant un tel dispositif de maintien ainsi qu'au moins une agrafe de bridage d'un faisceau électrique fixée sur une dite interface d'accueil.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 2 est une vue une vue partielle en perspective de la partie avant gauche de l'habitacle d'un véhicule automobile dans laquelle est implantée un dispositif de maintien selon l'invention ;
- la figure 3 représente une vue de dessus de la zone de la figure 2 ;
- la figure 4 est une vue en perspective partiellement arrachée de la zone d'implantation du dispositif de maintien selon l'invention ;
- la figure 5 représente une vue en perspective du dispositif de maintien selon l'invention ; et
- la figure 6 est une vue de dessous du dispositif de maintien selon l'invention.

### Description détaillée d'un mode de réalisation préféré

Dans la suite et sur les figures 2 à 4, on a gardé les mêmes références pour les éléments identiques ou similaires à ceux présents sur la figure 1 commentée dans la partie introductive de cette demande.

Tel qu'illustré sur ces figures, le dispositif de maintien 20 selon l'invention est destiné à être monté en remplacement d'un pion tel que 4 pour assurer le maintien de l'élément d'insonorisation 3 contre la traverse inférieure de baie 2.

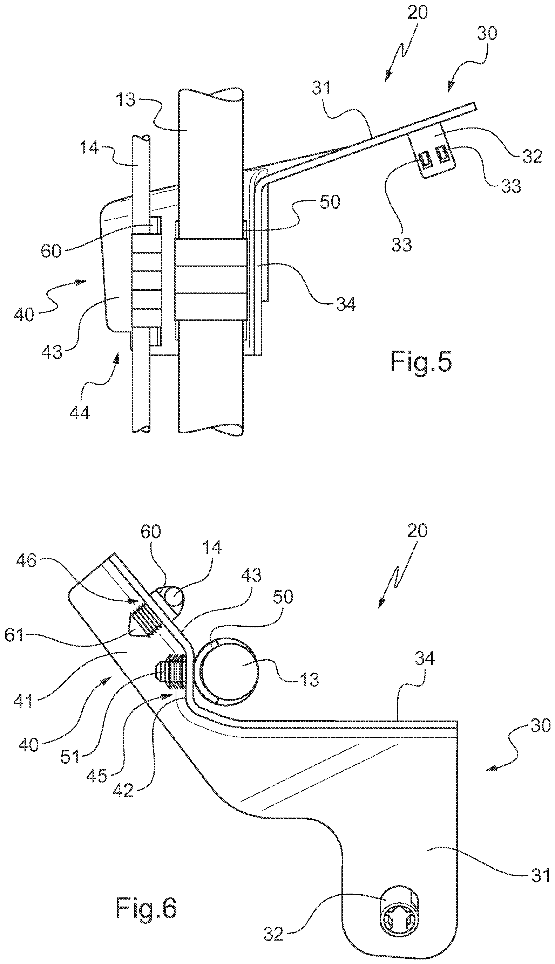

On va maintenant le décrire en détails en référence aux figures 5 et 6 sur lesquelles il est monté seul.

Par convention, les termes « avant », « arrière », « externe », « longitudinal » et « transversal » sont définis par rapport à sa position de montage conventionnelle à l'intérieur d'un véhicule automobile.

Le dispositif de maintien 20 est avantageusement venu de matière d'une seule pièce par moulage à partir d'un polymère thermoplastique tel que tel que le polypropylène, le polyamide ou l'ABS (Acrylonitrile Butadiène Styrène).

Ce dispositif 20 comporte un corps principal 30 destiné à recouvrir partiellement la couverture d'insonorisation 3, ainsi qu'une extension 40 s'étendant dans le prolongement de ce corps 30 en arrière de ce dernier et depuis son extrémité latérale externe.

Le corps principal 30 comprend une paroi de retenue inclinée 31 destinée à venir se plaquer, lors de la mise en place du dispositif 20 dans sa configuration de service illustrée par les figures 2 à 4, contre la face externe du panneau supérieur 3A de la couverture d'insonorisation 3 recouvrant la traverse inférieure de baie 2.

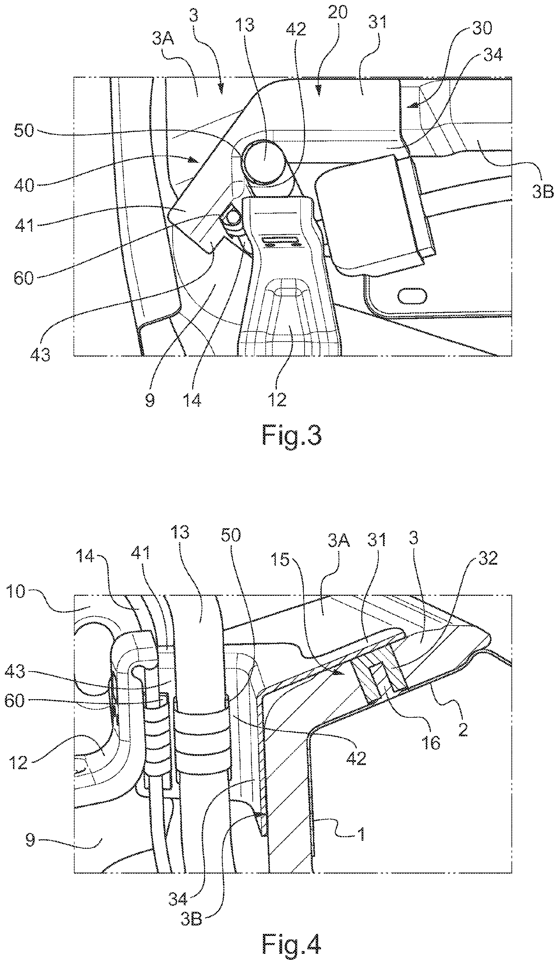

Ce corps principal 30 comporte également un fût de montage creux 32 saillant perpendiculairement depuis la face inférieure de la paroi de retenue 31 à proximité de son extrémité avant et prévu pour traverser un perçage de forme complémentaire 15 ménagé dans le panneau supérieur 3A de la couverture d'insonorisation 3 (figure 4).

Comme illustré sur la figure 5, ce fût 32 est doté de pattes élastiques 33 saillant radialement et destinées à permettre son encliquetage sur un goujon 16 saillant à l'intérieur du perçage 15 depuis la face supérieure de la traverse inférieure de baie 2 (voir figure 4).

Lorsque le dispositif 20 occupe sa configuration de service, la couverture d'insonorisation 3 se retrouve prise en sandwich entre la paroi de retenue 31 et la traverse inférieure de baie 2 de sorte à assurer son maintien.

La paroi de retenue 31 est dimensionnée longitudinalement de sorte que, dans cette configuration de service, son bord arrière débouche à l'aplomb du panneau vertical 3B de la couverture d'insonorisation 3 recouvrant le tablier avant 1 (figure 4).

Le corps principal 30 comprend en outre une façade arrière sensiblement plane 34 s'étendant verticalement depuis le bord arrière de la paroi de retenue 31 et agencée pour épouser la face externe du panneau vertical 3B, de sorte à empêcher tout pivotement du corps 30 (et donc du dispositif de maintien 20 dans son ensemble) selon au moins un premier sens de rotation autour de l'axe du goujon 5.

L'extension 40, qui s'étend en biais vers l'arrière et du côté externe du corps principal 30, comporte un toit plan incliné 41 prolongeant la paroi de retenue 31 de ce corps ainsi que deux murets 42, 43 s'étendant verticalement depuis le bord arrière du toit 31 dans le prolongement l'une de l'autre.

Plus précisément, le premier muret vertical 42 s'étend vers l'arrière de manière sensiblement perpendiculaire à la façade 34 du corps principal 30 en la prolongeant depuis son bord latéral externe, tandis que le second muret vertical 43 s'étend en biais vers l'arrière et du côté externe dans le prolongement du premier muret 42.

Au niveau du coin inférieur arrière du second muret vertical 43, l'extension 40 présente en outre une découpe rectangulaire 44 (figure 5).

Cette découpe 44 est conformée de sorte à s'emboîter par correspondance de forme sur un support latéral 9 lorsque le dispositif vient occuper sa configuration de service.

La coopération entre cette découpe 44 et le support latéral 9 permet d'empêcher tout déplacement vertical du dispositif 20 ainsi que tout pivotement de ce dernier selon le second sens de rotation autour de l'axe du goujon 5.

Le premier muret vertical 42 comprend en outre une interface d'accueil pour une agrafe d'attache 50 (ici de type à enrubanner) servant à assurer le maintien du faisceau électrique de pavillon 13 contre ce muret 42, tel qu'illustré sur les figures 2 à 6.

Cette interface d'accueil est en l'espèce constituée par un orifice oblong 45 ménagé dans ce muret 42 et destiné à permettre l'encliquetage de l'embase de type sapin 51 de l'agrafe 50 (figure 6).

Le second muret vertical 43 comprend également une interface d'accueil pour une agrafe d'attache 60 (ici de type à enrubanner) servant à assurer le maintien du faisceau électrique d'habitacle 14 contre ce muret 43, tel qu'illustré sur les figures 2 à 4.

Cette interface d'accueil est en l'espèce constituée par un orifice circulaire 46 ménagé dans ce muret 43 et destiné à permettre l'encliquetage de l'embase de type sapin 61 de l'agrafe 60 (figure 6).

Le fait de prévoir des orifices 45, 46 de formes différentes permet d'éviter tour risque d'erreur par l'opérateur sur la ligne de montage lors de la mise en place des agrafes 50, 60.

Selon des variantes de réalisation non représentées de l'invention, le dispositif de maintien est conformé différemment.

Les différentes parois constituant le corps principal et l'extension peuvent ainsi présenter des formes et des dimensions différentes.

Ce dispositif de maintien peut également être dépourvu d'extension telle que 40. Dans un tel cas de figure, la ou les interfaces d'accueil pour les agrafes d'attache sont alors ménagées directement sur la façade arrière du corps principal.

## Revendications

1. Dispositif de maintien d'une couverture d'insonorisation (3) de traverse inférieure de baie (2) et de tablier avant (1) d'un véhicule automobile, comportant une paroi de retenue (31) et un organe de montage creux (32) s'étendant depuis ladite paroi de retenue (31), ledit dispositif étant apte à occuper une configuration de service dans laquelle ledit organe de montage (32) traverse un perçage (15) ménagé dans ladite couverture (3) en étant encliqueté sur un goujon (5) saillant à l'intérieur dudit perçage (15) depuis ladite traverse inférieure de baie (2) de sorte que ladite couverture d'insonorisation (3) soit prise en sandwich entre ladite paroi de retenue (31) et ladite traverse inférieure de baie (2) ;
**caractérisé en ce qu'**il comporte en outre au moins une paroi d'attache (42, 43) reliée rigidement à ladite paroi de retenue (31) et dotée d'au moins une interface d'accueil (45, 46) pour une agrafe de bridage (50, 60) d'un faisceau électrique (13, 14).

2. Dispositif de maintien selon la revendication 1, **caractérisé en ce que** chaque dite interface d'accueil comprend au moins un orifice (45, 46).

3. Dispositif de maintien selon l'une des revendications 1 ou 2, **caractérisé en ce qu'**il comporte un corps principal (30) comprenant ladite paroi de retenue (31) et une façade (32) s'étendant verticalement depuis le bord arrière de ladite paroi de retenue (31), ladite façade (32) étant conformée de sorte à s'étendre parallèlement audit tablier avant (1) dans ladite configuration de service en épousant une portion de ladite couverture d'insonorisation (3).

4. Dispositif de maintien selon la revendication 3, **caractérisé en ce que** ladite façade constitue une dite paroi d'attache.

5. Dispositif de maintien selon l'une des revendications 3 ou 4, **caractérisé en ce qu'**il comporte une extension (40) comportant au moins un premier muret vertical (42) prolongeant ladite façade (32) du corps principal (30) vers l'arrière depuis l'un de ses bords latéraux.

6. Dispositif de maintien selon la revendication 5, **caractérisé en ce que** ladite extension (40) comporte en outre un second muret vertical (43) s'étendant en biais vers l'arrière dans le prolongement dudit premier muret vertical (42).

7. Dispositif de maintien selon l'une des revendications 5 ou 6, **caractérisé en ce qu'**au moins un dit muret vertical (42, 43) de ladite extension (40) constitue une dite paroi d'attache.

8. Dispositif de maintien selon l'une des revendications 5 à 7, **caractérisé en ce que** ladite extension (40) présente une découpe (44) ménagée dans un dit muret (43) et conformée de sorte à, dans ladite configuration de service, s'emboîter par correspondance de forme sur un élément support (9) solidaire de la structure de caisse dudit véhicule.

9. Dispositif de maintien selon l'une des revendications 1 à 8, **caractérisé en ce qu'**il est venu de moulage d'une seule pièce à partir d'un matériau thermoplastique.

10. Ensemble comportant un dispositif de maintien conforme à l'une des revendications 1 à 9 ainsi qu'au moins une agrafe de bridage (50, 60) d'un faisceau électrique (13, 14) fixée sur une dite interface d'accueil (45, 46).

## Patentansprüche

1. Vorrichtung zum Halten einer Schallschutzabdeckung (3) für einen unteren Querträger eines Kraftfahrzeuges (2) und eines vorderen Deckels (1) mit einer Haltewand (31) und einem hohlen Montageelement (32), das sich von der Haltewand (31) erstreckt, wobei die Vorrichtung eine Betriebskonfiguration einnehmen kann, in der das Montageelement (32) eine Bohrung (1) durchdringt 15), die in der Abdeckung (3) durch Schnappen auf einem Bolzen (5) ausgebildet ist, der in die Bohrung (15) von der unteren Rahmentraverse (2) ragt, sodass die Schalldämmungsabdeckung (3) zwischen der Haltewand (31) und der unteren Rahmentraverse (2) sandwichartig angeordnet ist, **dadurch gekennzeichnet, dass** sie ferner mindestens eine Wand aufweist Befestigungselement (42, 43), das mit der Haltewand (31) fest verbunden ist und mit mindestens einer Aufnahmeschnittstelle (45, 46) für eine Klemmklammer (50, 60) eines elektrischen Strahls (13, 14) versehen ist.

2. Haltevorrichtung nach Anspruch 1, **dadurch gekennzeichnet, dass** jede Aufnahmeschnittstelle mindestens eine Öffnung (45, 46) aufweist.

3. Haltevorrichtung nach einem der Ansprüche 1 oder 2, **dadurch gekennzeichnet, dass** sie einen Hauptkörper (30) umfasst, der die Haltewand (31) und eine Fassade (32) umfasst, die sich vertikal vom hinteren Rand der Haltewand (31) erstreckt, wobei die Fassade (32) so ausgebildet ist, dass sie sich parallel zu der vorderen Schürze (1) in der Betriebskonfiguration erstreckt einen Teil der Schalldämmdecke (3).

4. Haltevorrichtung nach Anspruch 3, **dadurch gekennzeichnet, dass** die Fassade eine Befestigungswand bildet.

5. Haltevorrichtung nach einem der Ansprüche 3 oder 4, **dadurch gekennzeichnet, dass** sie eine Verlängerung (40) mit mindestens einer ersten vertikalen Wand (42) aufweist, die die Fassade (32) des Hauptkörpers (30) von einer ihrer Seitenkanten nach hinten verlängert.

6. Haltevorrichtung nach Anspruch 5, **dadurch gekennzeichnet, dass** die Verlängerung (40) ferner eine zweite vertikale Wand (43) aufweist, die sich schräg nach hinten in der Verlängerung der ersten vertikalen Wand (42) erstreckt.

7. Haltevorrichtung nach einem der Ansprüche 5 oder 6, **dadurch gekennzeichnet, dass** mindestens eine der vertikalen Wände (42, 43) der Verlängerung (40) eine Befestigungswand bildet.

8. Haltevorrichtung nach einem der Ansprüche 5 bis 7, **dadurch gekennzeichnet, dass** die Verlängerung (40) einen Ausschnitt (44) aufweist, der in einer Wand (43) ausgebildet ist und so ausgebildet ist, dass er in der Betriebskonfiguration formschlüssig auf einem Trägerelement (9) aufliegt, das mit der Karosseriestruktur des Fahrzeugs fest verbunden ist.

9. Haltevorrichtung nach einem der Ansprüche 1 bis 8, **dadurch gekennzeichnet, dass** sie aus einem thermoplastischen Material einstückig angeformt ist.

10. Anordnung mit einer Haltevorrichtung nach einem der Ansprüche 1 bis 9 sowie mindestens einer Klemmklammer (50, 60) eines elektrischen Strahls (13, 14), der an einer Aufnahmeschnittstelle (45, 46) befestigt ist.

## Claims

1. A device for maintaining a soundproofing cover (3) of a lower bay cross (2) and a front apron (1) of a motor vehicle, having a restraint wall (31) and a hollow mounting device (32) extending from that restraint wall (31), that device is capable of occupying a service configuration in which the said mounting device (32) crosses a drilling device (11) (5) housed in the said cover (3) by being encased on a pin (5) protruding within the said hole (15) from the said bay bottom cross (2) so that the said soundproofing cover (3) is sandwiched between the said wall of restraint (31) and the said bay bottom cross (2);**characterized in** addition by at least one tether wall (42, 43) rigidly connected to the said retaining wall (31) and equipped with at least one reception interface (45, 46) for a bridging staple (50, 60) of an electric beam (13, 14).

2. A maintenance device in accordance with Claim 1, **characterized by** that each so-called reception interface includes at least one hole (45, 46).

3. A holding device according to one of claims 1 or 2, characterized as it consists of a main body (30) comprising the said restraint wall (31) and a facade (32) extending vertically from the rear edge of the said restraint wall (31), the said facade (32) being so conformed as to extend parallel to that front apron (1) in that service configuration by marrying a portion of the said soundproofing cover (3).

4. A maintenance device in accordance with Claim 3, **characterized by** the fact that the said facade constitutes a so-called fastening wall.

5. A maintenance device according to one of claims 3 or 4, characterized as it includes an extension (40) with at least one vertical wall (42) extending the said facade (32) of the main body (30) backward from one of its lateral edges.

6. A holding device according to Claim 5, **characterized in that** said extension (40) also includes a second vertical wall (43) extending in a rearward direction in the extension of the said first vertical wall (42).

7. A maintenance device according to one of the claims 5 or 6, **characterized in that** at least one word vertical wall (42, 43) of the said extension (40) constitutes a said fastening wall.

8. A maintenance device according to one of the claims 5 to 7, **characterized in that** the said extension (40) presents a cut (44) housed in a said low (43) and conformed so that, in the said service configuration, it fits together by shape on a support element (9) which is in solidarity with the body structure of the said vehicle.

9. A maintenance device according to one of the claims 1 to 8, **characterized in that** it came from molding a single piece from a thermoplastic material.

10. A set consisting of a holding device that conforms to one of the claims 1 to 9 and at least one clamping device (50, 60) of an electric beam (13, 14) fixed on a said receiving interface (45, 46).
